# EUROPÄISCHE PATENTANMELDUNG

(11) **EP 1 229 096 A1**
(43) Veröffentlichungstag der Anmeldung: **07.08.2002**
(21) Anmeldenummer: 02001394.2
(22) Anmeldetag: 19.01.2002
(51) Int. Cl.: C09J 133/08, C09J 129/10

(54) **Mischungen aus Polyvinylalkylether und Polyacrylat**

(30) Priorität: 02.02.2001 DE 10105278
(71) Anmelder: BASF AKTIENGESELLSCHAFT, 67056 Ludwigshafen (DE)
(72) Erfinder: Fink, Ralf, Dr., 67105 Schifferstadt (DE); Schumacher, Karl-Heinz, Dr., 67433 Neustadt (DE); Düsterwald, Uwe, 66851 Queidersbach (DE); Staller, Christelle, Dr., 67470 Selz (FR)

(57) **Zusammenfassung**

Die Erfindung betrifft Gemisch, enthaltend
A) ein Polymer, welches zu mindestens 40 Gew.-% aus C₁-C₁₈ Alkyl(meth)acrylaten (kurz Polyacrylat) besteht und
B) ein Polyvinylalkyletherhomo oder Copolymer (kurz Polyvinylalkylether), welches zu mindestens 70 Gew-.% aus Struktureinheiten der folgenden Formel besteht, 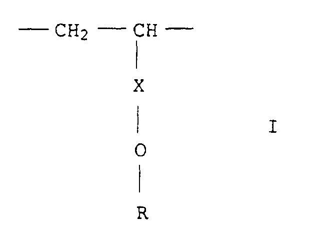
worin X für eine Einfachbindung oder eine C₁ bis C₃ Alkylgruppe und R für eine C₁-C₆ Alkylgruppe steht.

## Beschreibung

Die Erfindung betrifft ein Gemisch enthaltend
A) ein Polymer, welches zu mindestens 40 Gew.-% aus C₁-C₁₈ Alkyl(meth)acrylaten (kurz Polyacrylat) besteht und
B) ein Polyvinylalkyletherhomo oder copolymer (kurz Polyvinylalkylether), welches zu mindestens 70 Gew-.% aus Struktureinheiten der folgenden Formel besteht, 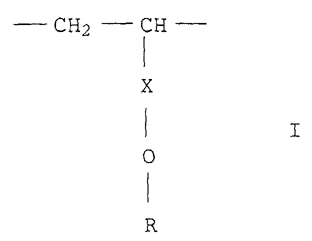
worin X für eine Einfachbindung oder eine C₁ bis C₃ Alkylengruppe und R für eine C₁-C₆ Alkylgruppe steht.

Weiterhin betrifft die Erfindung die Verwendung des Gemisches als Klebstoff, bzw. Schmelzhaftklebstoff, insbesondere zur Herstellung selbstklebender Artikel mit Weich-PVC als Trägermaterial.

Für die Herstellung von selbstklebenden Etiketten und Bändern sowie von bedruckten Folien in Außenanwendungen werden heute vielfach Weich-PVC-Folien eingesetzt, die mit einem Haftklebstoff beschichtet sind. Hierbei werden PVC-Folien u.a. mit niedermolekularen Weichmachern auf Phtalat Basis eingesetzt. Ein Problem, das durch die Verwendung dieser Weichmacher auftritt, ist, dass der Weichmacher aus der Folie in den Haftklebstoff migrieren kann. Hierdurch werden die anwendungstechnischen Klebeeigenschaften stark herabgesetzt. Sowohl die Kohäsion des Klebstoffs, als auch die Adhäsion des Klebstoffs zur Oberfläche, auf die das Etikett bzw. die Folie geklebt wird, können durch die Migration des Weichmachers in den Klebstoff deutlich vermindert werden.

Bisher literaturbekannte Lösungsansätze für dieses Problem sind die Verwendung von Barriereschichten (EP 103407) um die Migration zu verhindern bzw. herabzusetzen, Vernetzer (EP 330272) oder aber spezielle Comonomere (WO 96/26221).

Die bisherigen Lösungsansätze erfordern aufwendige Änderungen am Polymersystem durch Wahl spezieller Comonomere oder eine aufwendige Vorbehandlung des Trägermaterials.

Aufgabe der vorliegenden Erfindung waren Klebstoffe, welche sich auch für Trägermaterialien aus Weich-PVC eignen und die Migration von Weichmachern in ausreichender Weise verhindern, bzw. vermindern oder zumindest Folgen der Migration abmildern.

Demgemäß wurden die eingangs definierten Gemische und ihre Verwendung gefunden.

Das erfindungsgemäße Gemisch enthält zwingend ein Polyacrylat A) und einen Polyvinylalkylether B).

Das Polyacrylat besteht zu mindestens 40 Gew.-%, vorzugsweise zu mindestens 60 Gew.-%, besonders bevorzugt zu mindestens 80 Gew.-% aus C₁-C₁₈ Alkyl(meth)acrylaten.

Genannt seien insbesondere C₁-C₈ Alkyl(meth)acrylate, z.B. Methyl(meth)acrylat, Ethyl(meth)acrylat, n-Butyl(meth)acrylat, 2-Ethylhexyl(methacrylat.

Bevorzugt enthält das Gemisch einen Photoinitiator, so dass Polyacrylat mit UV-Licht vernetzbar ist. Dem erfindungsgemäßen Gemisch kann zur UV-Vernetzung ein Fotoinitiator zugesetzt werden. Der Fotoinitiator kann aber auch an das Polyacrylat gebunden sein.

Durch Bestrahlung mit energiereichem Licht, insbesondere UV-Licht bewirkt der Fotoinitiator eine Vernetzung des Polyacrylats, vorzugsweise durch eine chemische Propfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Das erfindungsgemäße Gemisch enthält vorzugsweise 0,0001 bis 1 mol, besonders bevorzugt 0,0002 bis 0,1, ganz besonders bevorzugt 0,0003 bis 0,01 mol des Fotoinitiators, bzw. der als Fotoinitiator wirksamen, an das Polyacrylat gebundenen Molekülgruppe, pro 100 g Polyacrylat.

Beim Fotoinitiator handelt es sich z.B. um Acetophenon, Benzoinether, Benzyldialkylketole oder deren Derivate.

Bevorzugt ist der Fotoinitiator an das Polyacrylat gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenonoder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche der Formel 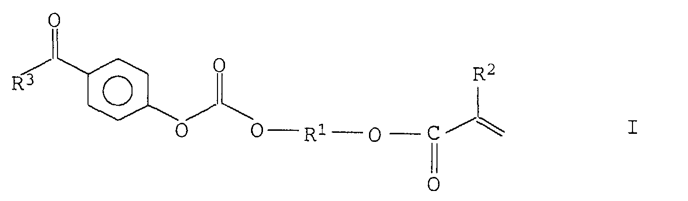 worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂-C₈-Alkylengruppe.

R³ steht besonders bevorzugt für eine Methylgruppe oder eine Phenylgruppe.

Weitere Monomere, aus denen das Polyacrylat aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren.

Als vinylaromatische Verbindungen kommen z.B. Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether, Vinylethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fummarsäure.

Weitere Monomere sind z. B. auch Hydroxylgruppen enthaltende Monomere, insbesondere C₁-C₁₀-Hydroxyalkyl(meth)acrylate, (Meth)acrylamid.

Darüberhinaus seinen Phenyloxyethylglykolmono-(meth)acrylat, Glydidylacrylat, Glycidylmethacrylat, Amino-(meth)acrylate wie 2-Aminoethyl (meth)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Das Polyacrylat hat vorzugsweise einen K-Wert von 30 bis 80, besonders bevorzugt von 40 bis 60, gemessen in Tetrahydrofuran (1%ige Lösung, 21°C).

Der K-Wert nach Fikentscher ist ein Maß für das Molekulargewicht und Viskosität des Polymerisats.

Die Glasübertragungstemperatur (Tg) des Polyacrylats beträgt vorzugsweise -60 bis +10°C, besonders bevorzugt -55 bis 0°C, ganz besonders bevorzugt -55 bis -10°C.

Die Glasübertragungstemperatur des Polyacrylates läßt sich nach üblichen Methoden wie Differentialthermoanalyse oder Differential Scanning Calorimetrie (s. z.B. ASTM 3418/82, sog. "midpoint temperature" bestimmen.

Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln (Lösungspolymerisation), insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n-und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon, Methylisobutylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymerisate können dann in lösungsmittelfreiem Zustand, d.h. als Schmelzen, eingesetzt werden. In manchen Fällen ist es auch von Vorteil, die neuen UV-vernetzbaren Polymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Die in dem erfindungsgemäßen Gemisch verwendeten Polyacrylate sind vorzugsweise lösungsmittelfrei. Ein Restgehalt an Lösungsmitteln, z.B. organischen Lösungsmitteln und/oder Wasser, kann jedoch unter 5 Gew.-Teilen, insbesondere unter 2 Gew.-Teil, besonders bevorzugt unter 1 Gew.-Teilen, ganz besonders bevorzugt unter 0,5 Gew.-Teilen Lösungsmittel, bezogen auf 100 Gew.-Teile der Summe aus Polyacrylat a) und Polyvinylalkylether B), betragen.

Neben dem Polyacrylat A) enthält das erfindungsgemäße Gemisch ein Polyvinylalkyletherhomo- oder copolymer, kurz Polyvinylalkylether B).

Der Polyvinylalkylether besteht zu mindestens 70 Gew.-%, vorzugsweise zu mindestens 85 Gew.-%, besonders bevorzugt zu mindestens 95 Gew.-% aus Struktureinheit der Formel

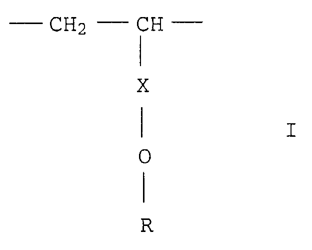

X steht für eine Einfachbindung (d.h. X entfällt) oder eine C₁-C₃ Alkylengruppe.
R steht für eine C₁-C₆ Alkylgruppe. Bevorzugte Struktureinheiten sind solche der Formel 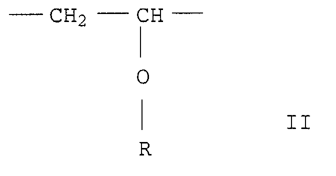 in der R die obige Bedeutung hat.

Bevorzugt steht R für eine C₁-C₃ Alkylgruppe, besonders bevorzugt für Methyl, Ethyl, Propyl und Isopropyl, ganz besonders bevorzugt ist Ethyl.

Derartige Polyvinylalkylether sind in bekannter Weise z.B. kationische Polymerisation von Vinylalkylethern (z.B. Vinylmethylether, Vinylethylether, Vinylpropylether oder Vinylisopropylethern, erhältlich.

Es können dabei auch unterschiedliche Vinylalkylether copolymerisiert werden, so dass der Polyvinylalkylether unterschiedliche Struktureinheiten der Formel I enthält.

Als Comonomere in Betracht kommen z.B auch (Meth)acrylate.

Der Polyvinylalkylether hat vorzugsweise einen K-Wert nach Fikentscher von 10 bis 90, besonders bevorzugt 20 bis 70 und ganz besonders bevorzugt 35 bis 70 (1%ige Lösung, Lösungsmittel Tetrahydrofuran, 21°C).

Die Herstellung der Polyvinylalkylether kann z.B. durch Lösungspolymerisation in organischen lösungsmitteln oder Substanzpolymerisation (d.h. ohne Lösungsmittel) erfolgen. Bevorzugt sind lösungsmittelfrei hergestellte Polyvinylalkylether.

Geeignete Polyvinylether sind z.B. unter der Bezeichnung Lutonale® von BASF erhältlich.

Zur Herstellung des erfindungsgemäßen Gemisches kann das Polyacrylat A) und der Polyvinylether b) zu einem beliebigen Zeitpunkt miteinander gemischt werden.

Insbesondere kann der Polyvinylether der nach der Lösungspolymerisation des Polyacrylats erhaltenen Lösung des Polyacrylats zugesetzt werden. Soweit gewünscht kann danach das Lösungsmittel entfernt werden (siehe oben).

Der Polyvinylether kann auch bereits vor oder während der Herstellung des Polyacrylats dem Polymerisationsgemisch zugesetzt werden.

Bevorzugt ist in jedem Fall die Herstellung des Polyacrylats durch Lösungspolymerisation, die Zugabe des Polyvinylethers vor Entfernung des Lösungsmittels und anschließende Entfernung des obigen Lösungsmittels (wie oben beschrieben).

Bei dieser Verfahrensweise werden Gemische mit besonders vorteilhaften Eigenschaften erhalten. Dies ist möglicherweise darauf zurückzuführen, dass es zumindest teilweise zu einer chemischen Anbindung des Polyvinylethers an das Polyacrylat, z.B. durch Pfropfreaktionen kommt.

Der Gehalt des Polyvinylethers im erfindungsgemäßem Gemisch beträgt vorzugsweise 0,1 bis 60 Gew.-Teile, besonders bevorzugt 5 bis 50 Gew.-Teile, ganz besonders bevorzugt 10 bis 40 Gew.-Teile, bezogen auf 100 Gew.-Teile A) + B) (fest, d.h. ohne Lösungsmittel)

Soweit das Gemisch einen Photoinitiator enthalten soll und dieser Photoinitator nicht z.B. durch Copolymerisation an Polyacrylat A gebunden ist, kann der Photoinitiator zu einem beliebigen Zeitpunkt zugegeben werden.

Das erfindungsgemäße Gemisch kann weitere Bestandteile, z.B. Additive wie Füllstoffe, Farbstoffe, Verlaufshilfsmittel und insbesondere Tackifier (klebrigmachende Harze) enthalten.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polyacrylat (fest/fest).

Das Gemisch kann als Klebstoff, insbesondere als Haftklebstoff verwendet werden.

Insbesondere kann das Gemisch auch als Schmelzhaftklebstoff verwendet werden, d.h. als weitgehend lösungsmittelfreies Gemisch, welches aus der Schmelze auf die gewünschten Substrate aufgetragen wird.

Insbesondere eignet sich das Gemisch als Klebstoff zum Verbinden von Substraten, dadurch gekennzeichnet, dass zumindest eine der zu verbindenden substratoberflächen aus Weich-PVC ist. Zum Beispiel kann der Klebstoff auf einen Träger, z.B. aus Papier oder Kunststoff aufgetragen werden und der so beschichtete Träger (z.B. ein Etikett, Klebeband oder Folie) auf ein Substrat aus Weich-PVC (z.B. Fensterprofile etc.) geklebt werden.

Insbesondere handelt es sich um ein mit UV-Licht vernetzbaren Klebstoff, Haftklebstoff oder Schmelzhaftklebstoff.

Insbesondere eigenen sich die erfindungsgemäßen Klebstoffe bzw. Schmelzklebstoffe zur Herstellung von selbstklebenden Artikeln, wie Etiketten, Klebebändern oder Klebefolien, z.B. Schutzfolien.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z.B. im Papier, Kunststofffolien aus Polyolefinen oder PVC handeln, bevorzugt ist PVC, besonders bevorzugt Weich-PVC.

Besondere Vorteile hat das erfindungsgemäße Gemisch bei Weich-PVC als Trägermaterial.

Unter Weich-PVC versteht man Polyvinylchlorid, welches einen Gehalt an Weichmachern hat und eine erniedrigte Erweichungstemperatur aufweist. Übliche Weichmacher sind z.B. Phthalate, Epoxide, Adipinsäureester. Der Gehalt der Weichmacher im Weich-PVC beträgt u.a. mehr als 10, insbesondere mehr als 20 Gew.-%.

Bei Weich PVC können Weichmacher in die Klebstoffschicht migrieren und die Klebtoffeigenschaften deutlich verschlechtern. Mit dem erfindungsgemäßen Gemisch wirkt sich die Migration der Weichmacher nicht oder kaum auf die Eigenschaften des Klebstoffs aus.

Gegenstand der vorliegenden Erfindung sind daher insbesondere selbstklebende Artikel mit Weich-PVC als Trägermaterial und einer darauf beschichteten Klebstoffschicht aus dem obigen Gemisch.

Zur Herstellung der Klebstoffschicht auf dem Trägermaterial kann das Trägermaterial in üblicher Weise beschichtet werden.

Vorzugsweise werden die obigen Gemische als Schmelzhaftklebstoff verwendet, d.h. die Beschichtung erfolgt aus der Schmelze, vorzugsweise bei einer Temperatur des Gemisches von 60 bis 200, insbesondere 90 bis 160°C. Bevorzugte Schichtdicken sind 2 bis 200 µm, insbesondere 5 bis 80 und besonders bevorzugt 10 bis 80 µm.

Im bevorzugten Falle UV-Licht vernetzbarer Polyacrylate erfolgt nach der Beschichtung eine Bestrahlung mit energiereichem Licht, insbesondere UV-Licht, so dass eine Vernetzung erfolgt.

Im allgemeinen werden die beschichteten Substrate dazu auf ein Transportband gelegt und das Transportband an einer Strahlungsquelle, z.B. einer UV-Lampe vorbeigeführt.

Der Vernetzungsgrad der Polymerisate hängt von der Dauer und Intensität der Bestrahlung ab.

Vorzugsweise beträgt die Strahlungsenergie im Wellenlängenbereich von 250 bis 260 nm 3 bis 70 mJ/cm² bestrahlte Fläche (gemessen mit dem UV Power Puck®).

Die erhaltenen, beschichteten Substrate werden vorzugsweise als Selbstklebeartikel, wie Etiketten, Klebebänder oder Schutzfolien verwendet.

Die erhaltenen, mit UV-Licht vernetzten Klebstoffbeschichtungen haben gute anwendungstechnische Eigenschaften, z.B. eine sehr gute Haftung und hohe innere Festigkeit.

### Beispiele

Verwendete Polymere:

Polyacrylat: ac Resin® A 203 UV, UV-vernetzbares Polyacrylat mit einer Glasübergangstemperatur von -35°C und einem copolymerisierten Benzophenoninitiator
- Polyvinylalkylether:: Lutonal® M40, ein Polyvinylmethylether (K-Wert 40)
Lutonal® A 25, ein Polyvinylethylether (K-Wert 25)
Lutonal® I 60, ein Polyvinylisopropylether (K-Wert 60)
Lutonal® A 50, ein Polyvinylethylether (K-Wert 50)

### Herstellung der Mischung

Nach der Polymerisation des Polyacrylats in in-BuOH wurde das Lutonal zugesetzt und anschließend das Lösemittel abdestilliert.

### Anwendungstechnische Prüfungen

Weich-PVC Folien wurden mit den in der Tabelle angegebenen Gemischen beschichtet, bei 120°C bis 140°C (Schichtdicke 25 g/m²).

Nach der Beschichtung wurde die Klebstoffschicht mit der angegebenen UV-Dosis vernetzt.

Danach wurden die Klebstreifen (Breite 2,5 cm) auf eine Stahloberfläche geklebt und die Schälfestigkeit bestimmt (sofort und nach 3 Tagen Lagerung bei 70°C, Angaben in N/2,5 cm).

Bei der Schälfestigkeitsprüfung betrug die Kontaktzeit 20 Minuten und die Abzugsgeschwindigkeit 300 mm/min.

Geprüft wurde auch die Wasserbeständigkeit (weiß anlaufen) Dazu wurde der Klebstofffilm unter Wasser gelagert und die Zeit bis zur visuell erkennbaren Trübung bestimmt.

Ergebnisse sind in der nachstehenden Tabelle aufgeführt.

| Gemische* | UV-C-Dosis (250-260 mm) [mJ/cm²] | Schälfestigkeit | | Weißanlaufen 24h |
|---|---|---|---|---|
| | | sofort | 3 Tg, 70°C | |
| 100 acResin A 203 UV + 30 Lutonal M 40 | 10 | 10,4 | 9,3 | 20 min |
| 100 acResin A 203 UV + 30 Lutonal A 25 | 10 | 21,3 | 11,3 | >24h |
| 100 acResin A 203 UV + 30 Lutonal A 50 | 10 | 15,8 | 9,5 | >24h |
| 100 acResin A 203 UV + 40 Lutonal I 60 | 5 | 21,7 | 19,4 | >24h |
| ac Resin A 203 UV | 10 | 6 | 1,5 | >24h |
| ac Resin A 203 UV | 5 | 8,5 | 3,9 | >24h |

| | | | | |
|---|---|---|---|---|
| *Zahlenangaben sind Gewichtsanteile | | | | |

## Patentansprüche

1. Gemisch, enthaltend
A) ein Polymer, welches zu mindestens 40 Gew.-% aus C₁-C₁₈ Alkyl(meth)acrylaten (kurz Polyacrylat) besteht und
B) ein Polyvinylalkyletherhomo- oder copolymer (kurz Polyvinylalkylether), welches zu mindestens 70 Gew-.% aus Struktureinheiten der folgenden Formel besteht, 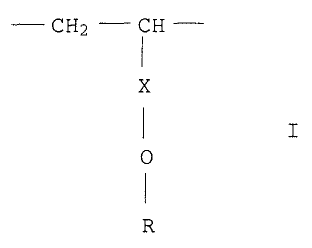
worin X für eine Einfachbindung oder eine C₁ bis C₃ Alkylengruppe und R für eine C₁-C₆ Alkylgruppe steht.

2. Gemisch gemäß Anspruch 1, **dadurch gekennzeichnet, dass** das Polyacrylat einen k-Wert nach Fikentscher von 30 bis 80 (in 1%iger Lösung, Lösungsmittel Tetrahydrofuran, 21°C) hat.

3. Gemisch gemäß Anspruch 1 oder 2, **dadurch gekennzeichnet, dass** das Gemisch einen Photoinitiator enthält.

4. Gemisch gemäß Anspruch 3 **dadurch gekennzeichnet, dass** der Photoinitiator an das Polyacrylat gebunden ist.

5. Gemisch gemäß einem der Ansprüche 1 bis 4, **dadurch gekennzeichnet, dass** im Polyvinylalkylether der Formel I X für eine Einfachbindung und R für eine C₁ bis C₄ Alkylgruppe steht.

6. Gemisch gemäß Anspruch 1, **dadurch gekennzeichnet, dass** der Polyvinylalkyether einen K-Wert nach Fikentscher von 10 bis 90 hat (in 1%iger Lösung, Lösungsmittel Tetrahydrofuran, 21°C) hat.

7. Gemisch gemäß einem der Ansprüche 1 bis 6, **dadurch gekennzeichnet, dass** der Gehalt des Polyvinylalkylethers 0,1 bis 60 Gew.-Teile, bezogen auf 100 Gew.-Teile Polyacrylat A) beträgt.

8. Gemische gemäß einem der Ansprüche 1 bis 7 erhältlich durch Herstellung des Polyacrylats durch Lösungspolymerisation und Zugabe des Polyvinylalkylethers vor Entfernung des bei der Polymerisation verwendeten Lösungsmittels.

9. Gemäß einem der Ansprüche 1 bis 8, **dadurch gekennzeichnet, dass** das Gemisch einen Gehalt an Wasser oder organischen Lösungsmitteln von weniger als 5 Gew.-Teilen bezogen auf 100 Gew.-Teile der Summe aus Polyacrylat A) und Polyvinylalkylether B) aufweist.

10. Verwendung eines Gemisches gemäß einem der Ansprüche 1 bis 9 als Klebstoff, insbesondere Haftklebstoff.

11. Verwendung eines Gemisches gemäße einem der Ansprüche 1 bis 9 als Schmelzhaftklebstoff

12. Verwendung eines Gemischs gemäß einem der Ansprüche 1 bis 9 als Klebstoff, **dadurch gekennzeichnet, dass** zumindest eine der durch den Klebstoff zu verbindenden Oberflächen aus Weich-PVC ist.

13. Verwendung eines Gemisches gemäß einem der Ansprüche 1 bis 9 als Haftklebstoff, insbesondere Schmelzhaftklebstoff für die Herstellung selbstklebender Artikel mit Weich-PVC als Trägermaterial.

14. Verfahren zur Herstellung von selbstklebenden Artikeln, **dadurch gekennzeichnet, dass** das Gemisch gemäß einem der Ansprüche 1 bis 9 auf Substrate, wie Etiketten, Bänder oder großflächigen Folien aufgetragen wird und anschließend eine Vernetzung durch UV-Licht erfolgt.

15. Verfahren gemäß Anspruch 14, **dadurch gekennzeichnet**, das das Gemisch aus der Schmelze bei Temperaturen von 100 bis 160°C auf die Substrate aufgetragen wird und anschließend mit UV-Licht vernetzt wird.

16. Selbstklebende Artikel erhältlich durch ein Verfahren gemäß einem der Ansprüche 14 oder 15 oder durch Verwendung gemäß einem der Ansprüche 10, 11 oder 13.
